# EUROPÄISCHE PATENTANMELDUNG

(11) **EP 1 990 435 A1**
(43) Veröffentlichungstag der Anmeldung: **12.11.2008**
(21) Anmeldenummer: 08007456.0
(22) Anmeldetag: 16.04.2008
(51) Int. Cl.: C22C 37/06, B60G 7/00

(54) **Verwendung einer Stahllegierung**

(30) Priorität: 20.04.2007 DE 102007018861
(71) Anmelder: Benteler Automobiltechnik GmbH, 33102 Paderborn (DE)
(72) Erfinder: Frehn, Andreas, 33129 Delbrück (DE); Zuber, Armin, 33175 Bad Lippspringe (DE)

(57) **Zusammenfassung**

Beschrieben ist die Verwendung einer Stahllegierung als Guss für Fahrwerksbauteile, insbesondere für Querlenker. Erfindungsgemäß weist der Stahlguss die folgende, in Gewichtsprozent angegebene Zusammensetzung auf: Kohlenstoff (C) 0,09 -0,13 %, Silizium (Si) 0,15 - 0,30 %, Mangan (Mn) 1,10 -1,60 %, Phosphor (P) max. 0,015 %, Schwefel (S) max, 0,011 %, Chrom (Cr) 1,00 -1,60 %, Molybdän (Mo) 0,30 - 0,60 %, Aluminium (Al) 0,02 - 0,05 %, Vanadium (V) 0,12 - 0,25 %, Rest Eisen (Fe) und erschmelzungsbedingte Verunreinigungen.

## Beschreibung

Die Erfindung betrifft die Verwendung einer Stahllegierung.

Fahrzeugbauteile aus Gusswerkstoffen sind in der Fahrzeugindustrie bekannt.

So beschreibt die WO 03/031252 A1 ein Trägerelement, das aus Eisen, insbesondere aus Stahl, gegossen wird, wobei das Trägerelement eine Wandstärke von weniger als 3 mm aufweist. Allerdings handelt es sich hierbei nicht um ein Fahrwerksbauteil, sondern um ein Strukturbauteil wie beispielsweise eine A- Säule eines Kraftfahrzeugs. An Strukturbauteile und Fahrwerksbauteile werden wegen ihres unterschiedlichen Einsatzbereiches unterschiedliche Anforderungen gestellt. Während Strukturbauteile dazu dienen, im Crashfall Stoßenergie abzufangen, müssen Fahrwerksbauteile dynamischen Belastungen, die durch die Bewegung des Fahrzeugs entstehen, standhalten. Wegen dieser unterschiedlichen Anforderungen sind diese beiden Bauteilarten also nur begrenzt miteinander vergleichbar. Zudem wird das Trägerelement beispielsweise als Fachwerkstruktur ausgebildet und zur Verstärkung mit metallischen Hohlkugeln oder mit Metallschaum gefüllt, welche dann umgossen werden. Der Herstellungsprozess ist daher relativ aufwändig. Weiterhin wird die Legierung des Stahlgusses hinsichtlich ihrer chemischen Zusammensetzung nicht konkretisiert.

Aus der DE 100 15 325 A1 ist eine Tragrahmenstruktur bekannt, die als dünnwandiges Stahlgussbauteil mit einer Wandstärke bis hinab zu 1,0 mm ausgestaltet ist. Allerdings handelt es sich hier wiederum um ein Strukturbauteil. Außerdem ist auch hier die konkrete chemische Zusammensetzung des Stahlgusses nicht genannt.

Die DE 103 57 939 A1 beschreibt ebenfalls eine Strukturteil aus Stahlguss, nämlich ein Bauteil für eine Tragrahmenstruktur, das als dünnwandiges Stahlgussteil ausgestaltet ist. In das Bauteil ist ein Stahlblech derart integriert, dass ein innenliegender Teil des Stahlblechs im Stahlgussteil eingebettet ist. Somit ist das Bauteil nicht einstückig ausgestaltet, was den Herstellungsprozess erschwert.

Die DE 100 29 189 A1 beschreibt einen Querlenker, der als einstückiges Gussteil ausgestaltet ist und aus Stahlguss besteht. Die konkrete chemische Zusammensetzung des Stahlgusses ist allerdings nicht bekannt.

Die EP 0 655 511 beschreibt einen warmfesten, ferritischen Stahlguss für Auspuffanlagenteile für Kraftfahrzeuge, der die folgende, in Gewichtsprozent angegebene Zusammensetzung aufweist: C = 0,20 -1,20 %, C-Nn/8 = 0,05 - 0,45 %, Si ≤ 2 %, Mn ≤ 2 %, Cr = 16,0 -25,0 %, W und/oder Mo = 1,0 - 5,0 %, Nb = 1,02 - 6,0 %, Ni = 0,1 - 2,0 %, N = 0,01 - 0,15 %, Rest Eisen und erschmelzungsbedingte Verunreinigungen. Durch den hohen Kohlenstoffgehalt von bis zu 1,2 % ist der Werkstoff jedoch kaum schweißbar. Da Fahrwerksbauteile beim Verbau häufig an andere Bauteile angebunden werden müssen, ist die Schweißbarkeit eine wichtige Voraussetzung. Gusssorten mit hohem Kohlenstoffgehalt eignen sich daher nicht.

Die DE 100 07 192 C2 beschreibt einen Lenker aus gepressten, miteinander verschweißten Teilen aus vergütbaren Stählen oder aus einem gezogenen oder längsnahtgeschweißten, gegebenenfalls mittels hydraulischen Innenhochdruck umgeformten, endseitig geprägten und geschnittenen sowie vergütbaren Stahlrohr. Für den Bau dieses Lenkers ist allerdings eine Vielzahl von Arbeitsschritten in Form von Pressen, Stanzen, Biegen, Ziehen, Längsnahtschweißen etc. erforderlich. Diese umfangreichen Arbeitsschritte erschweren den Herstellungsprozess.

Der Einsatz der erfindungsgemäßen Legierungszusammensetzung als Werkstoff zur Herstellung von Formbauteilen im Stahlleichtbau ist beispielsweise aus der DE 102 21 487 B4 bekannt, Allerdings geht es hier um Formbauteile, insbesondere um crashrelevante Fahrzeugteile wie Crashboxen, Überrollbügel, Seitenaufpralielemente oder Säulenverstärkungen, bei denen neben einer gewissen Festigkeit auch eine gewisse Nachgiebigkeit, nämlich eine plastische Verformungsreserve gefordert wird, um Crashenergie umwandeln zu können. Diese Formbauteile werden aus Platinen gefertigt. Für den Herstellungsprozess gilt das zuvor gesagte.

Die DE 102 61 210 A1 schlägt die Verwendung der erfindungsgemäßen Legierungszusammensetzung zur Herstellung von warmgeformten Kraftfahrzeugbauteilen vor, obwohl die Stahlsorte lufthärtend ist. Warmformen bedeutet Erhitzen auf eine Temperatur über den AC₃- Punkt der Legierung, Formen in einem Werkzeug und regelmäßig Härten unter Verbleib in dem Werkzeug. Dabei ist der Werkstoff auch nach der Werkzeughärtung noch schweißbar und kann bei 500-600° C hochtemperaturverzinkt werden. Auch hierbei handelt es sich jedoch um die Verwendung von Platinen.

Ausgehend von dem Stand der Technik ist es daher Aufgabe der Erfindung, die Verwendung einer Stahllegierung anzugeben, die den Einsatzbedingungen eines Fahrwerksbauteils, insbesondere den dynamischen Belastungen, denen es ausgesetzt ist und den Verbaubedingungen gerecht wird und die ein vereinfachtes Herstellungsverfahren für Fahrwerksbauteile ermöglicht.

Diese Aufgabe löst die Erfindung mit den Merkmalen des Patentanspruchs 1.

Vorgeschlagen wird die Verwendung einer Stahllegierung, die die folgende, in Gewichtsprozent angegebene Zusammensetzung aufweist: Kohlenstoff (C) 0,09 - 0,13 %, Silizium (Si) 0,15 - 0,30 %, Mangan (Mn) 1,10 -1,60 %, Phosphor (P) max. 0,015 %, Schwefel (S) max. 0,011 %, Chrom (Cr) 1,00 - 1,60 %, Molybdän (Mo) 0,30 - 0,60 %, Aluminium (Al) 0,02 - 0,05 %, Vanadium (V) 0,12 - 0,25 %, Rest Eisen (Fe) und erschmelzungsbedingte Verunreinigungen als Gusswerkstoff für Fahrwerksbauteile. Insbesondere können so einstückige Fahrwerksbauteile hergestellt werden, die bevorzugt eine Wanddicke kleiner 5 mm aufweisen. Gerade Querlenker lassen sich so einfach und mit guten Eigenschaften produzieren.

Vorteil der erfindungsgemäß verwendeten Legierung gegenüber Grauguss ist die gute Schweißbarkeit. Aufgrund des geringen Kohlenstoffanteils der erfindungsgemäßen Stahllegierung in Höhe von 0,18 bis 0,3 % lassen sich die Bauteile beim Verbau gut an andere Bauteile mittels Schweißen anbinden, Grauguss weist einen wesentlich höheren Kohlenstoffgehalt auf und ist schlecht schweißbar, Gegenüber Aluminiumguss oder Eisenguss weist der erfindungsgemäße Stahlguss eine gute Zähigkeit auf. Diese ist für die Herstellung eines Fahrwerksbauteils von großer Wichtigkeit, da derartige Bauteile neben schwingender Beanspruchung auch Schlag- und Stoßbelastungen standhalten müssen. Gegenüber der Herstellung von Fahrwerksbauteilen, insbesondere von Querlenkern, im Blechschalen- oder Rohrdesign hat die erfindungsgemäße Verwendung der Stahllegierung als Stahlguss den Vorteil, dass auch komplexe Bauteilgeometrien gegossen werden können.

Die erfindungsgemäße Stahllegierung härtet an Luft und erreicht im gehärteten Zustand hohe Festigkeitswerte. Während des Giessvorgangs wird die Giesslegierung zunächst geschmolzen und erstarrt dann in der Gießform zu einem Gussgefüge. Das Gussgefüge muss anschließend normalisiert werden, was bedeutet, dass das Gussgefüge bis oberhalb des AC₃ - Punktes der Legierung erwärmt wird. Die erfindungsgemäße Stahllegierung geht dabei in einen überwiegenden Austenitzustand über und härtet anschließend an Luft aus. Nach der Härtung wurden Proben genommen. Dabei besaß der Werkstoff zum Beispiel eine Dehngrenze R_{p0,2} von 593 Mpa, eine Zugfestigkeit Rₘ von 831 MPa und eine Bruchdehnung von A₅ 13 %. Ein separater Härtevorgang zur Erhöhung der Festigkeitswerte ist nicht notwendig. Durch die Verwendung der erfindungsgemäßen Stahlgusslegierung kann das Bauteil daher ohne Hohlräume oder eingegossene Aluminium-Bereiche vollständig aus Stahlguss hergestellt werden. Insofern können Bauteile einstückig hergestellt und die Wandstärke durch die erhöhte Festigkeit auf ein Minimum reduziert werden. Vorteile dieser Wandstärkenreduktion sind eine Reduktion des Gewichts des Bauteils und ein geringerer Bedarf an Werkstoff.

Falls benötigt, ist der erfindungsgemäße Stahlguss aber auch in einem separaten Arbeitsgang partiell oder vollständig härtbar oder vergütbar. Hierbei können diverse bereits bekannte partielle oder vollständige Erwärmungs- und/ oder Härtemethoden angewandt werden. Zudem ist die Stahllegierung auch nach dem Gießen noch formbar. Durch die erfindungsgemäße Verwendung der aufgezeigten Stahllegierung als Gusswerkstoff sind im Herstellungsprozess keine aufwändigen Biege- und/ oder Tiefziehprozesse notwendig. So kann die Anzahl der Arbeitsschritte gegenüber der Blechbauweise gesenkt werden. Die erfindungsgemäß verwendete Stahllegierung ist gut schweißbar. Zwar werden beim Einbringen von Schweißwärme voreingestellte Festigkeiten in der Schweißnaht herabgesetzt. Da die erfindungsgemäß verwendete Legierung jedoch lufthärtend ist, härtet sie auch im Bereich der Schweißnähte wieder aus. Vorteilhaft kann das Fahrwerksbauteil anschließend noch beschichtet, beispielsweise feuerverzinkt werden. Auch bei Beschichtungsverfahren mit erhöhtem Wärmeeintrag stellen sich bei der erfindungsgemäßen Verwendung der Legierung die hohen Festigkeitswerte durch die Lufthärtung wieder ein.

Die Verwendung der erfindungsgemäßen Stahlgusslegierung ist zwar weiterhin im Vergleich zu Eisenguss oder Aluminiumguss relativ kostspielig. Der erhöhte Kostenaufwand wird jedoch durch die Gewichtsreduktion und die geringere Menge an benötigtem Werkstoff relativiert.

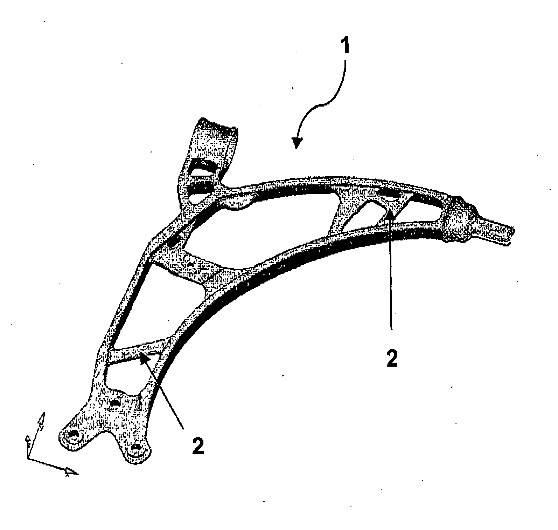

Die einzige Figur zeigt einen gegossenen Querlenker 1, Der Querlenker 1 ist dünnwandig gegossen und nur durch wenige Querstreben 2 verstärkt. Dadurch ist er besonders leicht bauend.

## Patentansprüche

1. Verwendung einer Stahllegierung, die die folgende, in Gewichtsprozent angegebene Zusammensetzung aufweist:
| | |
|---|---|
| Kohlenstoff (C) | 0,09 - 0,13 % |
| Silizium (Si) | 0,15-0,30% |
| Mangan (Mn) | 1,10-1,60 % |
| Phosphor (P) | max. 0,015 % |
| Schwefel (S) | max. 0,011 % |
| Chrom (Cr) | 1,00 - 1,60 % |
| Molybdän (Mo) | 0,30 - 0,60 % |
| Aluminium (Al) | 0,02 - 0,05 % |
| Vanadium (V) | 0,12 - 0,25 % |
Rest Eisen (Fe) und erschmelzungsbedingte Verunreinigungen,
als Gusswerkstoff für Fahrwerksbauteile.

2. Verwendung einer Stahllegierung nach Anspruch 1 zur Herstellung von einstückigen Fahrwerksbauteilen.

3. Verwendung einer Stahllegierung nach Anspruch 1 oder 2 zur Herstellung von Fahrwerksbauteilen, die eine Wanddicke kleiner 5 mm aufweisen.

4. Verwendung einer Stahllegierung nach einem der vorhergehenden Ansprüche zur Herstellung eines gegossenen Querlenkers 1 für ein Fahrwerk eines Kraftfahrzeugs.
